# EUROPEAN PATENT SPECIFICATION

(11) **EP 3 640 469 B1**
(45) Date of publication and mention of the grant of the patent: **06.07.2022**
(21) Application number: 18200958.9
(22) Date of filing: 17.10.2018
(51) Int. Cl.: F02M 55/02, B21D 39/06, B23P 11/00, F02M 55/00, F16L 41/08

(54) **FUEL RAIL ASSEMBLY AND METHOD FOR ASSEMBLING A FUEL RAIL ASSEMBLY**
KRAFTSTOFFSCHIENENBAUGRUPPE UND VERFAHREN ZUR ANORDNUNG EINER KRAFTSTOFFSCHIENENBAUGRUPPE
ENSEMBLE DE RAMPE DE CARBURANT ET PROCÉDÉ D'ASSEMBLAGE D'UN ENSEMBLE DE RAMPE DE CARBURANT

(43) Date of publication of application: 22.04.2020
(73) Proprietor: Vitesco Technologies GmbH, 93055 Regensburg (DE)
(72) Inventor: Ricci, Roberto, 57124 Livorno (IT)
(74) Representative: Vitesco Technologies

(56) References cited:
- EP-A1- 0 668 115
- EP-A1- 2 860 387
- DE-A1- 3 545 554
- DE-A1- 10 020 506
- DE-A1-102008 035 491
- JP-A- 2001 059 464
- US-A- 2 916 816
- US-A1- 2005 235 963

## Description

The present invention according to a first aspect relates to a method for assembling a fuel rail assembly according to claim 1.

A second aspect not covered by the claimed invention relates to a fuel rail assembly, comprising a fuel rail and a component, wherein the fuel rail has a casing which borders an inner cavity, wherein the component has a housing which borders an inner space, wherein the casing has a first via hole and the housing has a second via hole, and wherein the housing is coupled to the casing so that the space is in fluid communication with the inner cavity by a hollow passage.

In the prior art it is known to connect components like e.g. injector cups and/or sensor ports to a fuel rail, in particular to a main gallery of a fuel rail. As it is known to those skilled in the art an injector cup is used for connecting a fuel injector to the fuel rail in order to inject and dose fuel to a cylinder, in particular a cylinder of an internal combustion engine. On the other hand, a sensor port e.g. may be used to connect a sensor to the fuel rail. Regarding both an injector cup and a sensor port it is important that the component is connected to the fuel rail so that the connection has a desired mechanical strength and also so that the required fluid passage between the component and the fuel rail is tightened against the outer atmosphere.

EP2860387 A1 and US2916816 A disclose a method for assembling a fuel rail assembly.

Up to now, this problem is solved either by using a brazing process or a mechanical assembly with screwed components together with using gaskets, in particular O-rings, for sealing a metal-to-metal connection.

The known mechanical technology hence requires two steps of connection, i.e. the one for achieving the mechanical strength and the other for achieving the required tightening. Both known technologies are extensive regarding the required work and costs.

According to the first aspect it is an object of the invention to provide an improved method for assembling a fuel rail assembly. In particular, it is intended to provide a method for assembling a fuel rail assembly which can overcome at least some or all of the above-described disadvantages. In particular, it is intended to provide a method for assembling a fuel rail and a component, which in particular is an injector cup or a sensor port, without a brazing process and without a process including screwing and O-ring sealing.

According to the second aspect it is an object of the invention to provide an improved fuel rail assembly. In particular, it is intended that the provided fuel rail assembly can overcome at least some or all of the above-described disadvantages. Further, in particular it is intended that the improved fuel rail assembly includes a fuel rail and a component, which in particular is an injector cup or a sensor port, which are assembled without a brazing process and without a process including screwing and O-ring sealing.

Regarding the first aspect, in order to solve the mentioned object the invention suggests that the first via hole has a circular hollow cross section which is surrounded by a wall region of the casing, the second via hole has a circular hollow cross section which is surrounded by a cylindrical wall section of the housing, and coupling of the housing to the casing so that the space is in fluid communication with the inner cavity by a hollow passage comprises the steps: inserting the cylindrical wall section into the first via hole, providing an expander bush which has a convex outer surface of revolution with regard to a geometric rotational axis and which has a third via hole extending along the geometric rotational axis, wherein the convex outer surface of revolution has a maximum diameter which is bigger compared to a diameter of the circular hollow cross section of the second via hole, pressing the expander bush in the second via hole so that the hollow passage extends through the third via hole, so that the cylindrical wall section is expanded in a radial direction by the convex outer surface of revolution and so that the expander bush is fixed by a press-fit within the second via hole, wherein the radial expansion of the cylindrical wall section causes a mechanical coupling of the cylindrical wall section to the casing at a lateral wall section of the first via hole.

Preferably, the wall of the fuel rail surrounding the first via hole and the cylindrical wall section are both made of metal. The radial expansion of the cylindrical wall section occurs because of a deformation of the cylindrical wall section caused by the pressure exerted by the expander bush. Preferably, the deformation is a plastic deformation or at least includes a plastic deformation. The mechanical coupling can ensure a connection as well as a tightening between the component and the fuel rail. In particular, if the component and the fuel rail, as preferred, are both made of metal, the achieved sealing "metal to metal" is reliable without the need of brazing or screwing for the mechanical strength and without a gasket, a sealing ring, or the like for achieving the tightening. Preferably, the casing may be a main gallery or a part of a main gallery of the fuel rail.

There are many possibilities for performing further preferred modifications:
It is preferred that the component is an injector cup or is a sensor port.

Further, it is preferred that that the radial expansion of the cylindrical wall section causes a press-fit between the outside of the cylindrical wall section and the wall region surrounding the first via hole. The press-fit may be effective evenly along the complete circumference of the first via hole. It may provide a strong mechanical connection as well as a reliable tightening between the cylindrical wall section and the wall of the fuel rail surrounding the first via hole.

In a preferred embodiment it is provided that the convex outer surface of revolution has a maximum diameter which is bigger compared to a diameter of the circular hollow cross section of the second via hole before the expander bush is pressed into the second via hole. Further, it is preferred that before assembling the fuel rail assembly the diameter at the outside of the cylindrical wall section in a longitudinal region dedicated to be inserted in the first via hole and a diameter of the circular hollow cross section of the first via hole in a longitudinal region dedicated for inserting the cylindrical wall section are adapted to each other in order to cooperate for a loose fit or a medium fit.

In order to facilitate pressing the expander bush into the second via hole and in order to ensure that the third via hole is aligned appropriately for providing a fluid passage the method comprises: providing an insertion tool for pressing the expander bush into the second via hole, wherein the insertion tool comprises an operating member, in particular a handle or a drivable member, in particular drivable by an electric, pneumatic or hydraulic device, and wherein the insertion tool comprises a pin, wherein the pin has a diameter which is adapted to a diameter of the third via hole of the expander bush to cooperate for a loose fit or a medium fit, and wherein the insertion tool comprises an annular contact surface which is adjacent to the pin and which extends transversely to a longitudinal axis of the pin, inserting the pin into the third via hole so that the contact surface is in contact with the expander bush, and pressing the expander bush into the third via hole by the insertion tool. In this regard it is preferred that the longitudinal axis is aligned concentrically with regard to the second via hole before pressing the expander bush into the second via hole.

According to the second aspect in order to solve the underlying object the invention suggests that the first via hole has a circular hollow cross section which is surrounded by a wall region of the casing, the second via hole has a circular hollow cross section which is surrounded by a cylindrical wall section of the housing, the cylindrical wall section is axially inserted in the first via hole, the fuel rail assembly comprises an expander bush which has a convex outer surface of revolution with regard to a geometric rotational axis, the expander bush has a third via hole extending along, in particular concentrically with regard to, the geometric rotational axis, the expander bush is press-fitted in the second via hole so that the hollow passage extends through the third via hole and the cylindrical wall section is press-fitted in the first via hole. Regarding possible effects and advantages reference is made to the preceding description.

Also with regard to the second aspect there are many further possibilities for performing preferred modifications:
It is preferred that the component is an injector cup or a sensor port. Preferably, the fuel rail and/or the injector cup may be adapted for high pressure applications.

Further, it is preferred that the convex outer surface of revolution has a maximum diameter which is bigger compared to a diameter of the circular hollow cross section of the second via hole in a longitudinal section which, compared to the expander bush, is closer to an end face of the cylindrical wall section. Preferably, the convex outer surface of revolution may be a section of a spherical surface. Regarding the shape of the expander bush it is also preferred that the expander bush has a first flat surface extending at right angles to the rotational axis and surrounding a first orifice of the third via hole. Furthermore, regarding the shape of the expander bush it is preferred that the expander bush has a second flat surface extending at right angles to the rotational axis and surrounding a second orifice of the third via hole wherein the first flat surface and the second flat surface are sides of the expander bush which are parallel and opposite to each other. Preferably, the expander bush has an outer shape of a cut ball, i.e. a ball which is cut at two opposite sides along the flat surfaces. Preferably, the third via hole may extend concentrically with regard to the rotational axis. Further, preferably the third via hole has a cylindrical inner surface.

In order to strengthen the mechanical connection and in order to further improve the tightening it is preferred that a number of grooves are provided at an outside of the cylindrical wall section of the component and that due to a radial expansion of the cylindrical wall section because of the pressure exerted by the expander bush material surrounding the first via hole is penetrated into the grooves, wherein the grooves in particular are sharp-edged and in particular have a saw-tooth-profile, wherein each groove in particular has a first groove surface at right angles with regard to a center axis of the second via hole and has a second groove surface which is inclined to the first groove surface and which is farer away from an end face of the cylindrical wall section compared to the aforesaid first groove surface. The grooves can further increase the reliability of the sealing. In particular, if the component and the fuel rail, as preferred, are both made of metal, the achieved sealing "metal to metal" is reliable without the need of brazing, a gasket, a sealing ring, or the like. As an alternative or in combination it is possible that grooves are provided at an inner lateral surface of the first via hole of the fuel rail. When the cylindrical wall section includes the grooves it is preferred that the cylindrical wall section is made of a material which is harder compared to the material of the wall region surrounding the first via hole. When the grooves are formed at the wall region surrounding the first via hole it is preferred that the material of this all region is harder compared to the material of the cylindrical wall section.

It is preferred that the component and/or the fuel rail (at least its wall region surrounding the first via hole) is made of steel, preferably of stainless steel. In this regard it follows from the description that the invention also provides a stainless steel fuel rail assembly without brazing with an expansion coupling.

Further, from the above description it follows that the invention solves the above-indicated objects by providing a mechanical coupling by means of a convex, in particular spherical, surface of the expander bush which is mounted with press-fit into the second via hole of the component, preferably by the insertion tool, in order to deform and expand the material of the component inside the second via hole of the fuel rail. According to the invention such mechanical coupling, which includes a press-fit does not only provide the required mechanical strength, but also provided the required tightened connection. Further, the invention suggests to improve the mechanical strength and the effect of tightening by providing grooves at the outside of the section of the component which is inserted within the first via hole. Hence, the coupling provided by the present invention without brazing and without screwed components but on using an expansion at the component can guarantee the required mounting as well as the required sealing. Furthermore, it is possible to use the size of the hollow cross section of the third via hole in the expander bush (which, depending on the selected shape, could be also described to be a cut ball having an internal via hole), which is small compared to the hollow cross sections of the first via hole and second via hole, for damping effects. In particular, it is even possible to calibrate the size of the hollow cross section of the third via hole. Hence, the third via hole, which lies in the fuel passage into the expander bush can be used as an additional function (secondary function) as an "orifice" for reduction of the pressure pulsation occurring inside the rail (damper effect).

Exemplary embodiments of the invention are described with reference to the accompanying drawings. These are as follows:
- Fig. 1: is a perspectival cross section of a preferred embodiment of a fuel rail assembly in accordance to the present invention;
- Fig. 2: is a sectional view of the situation as shown by Fig. 1;
- Fig. 3: shows a first step of a preferred embodiment of a method for assembling a fuel rail assembly in accordance to the present invention;
- Fig. 4: shows a second step of a preferred embodiment of a method for assembling a fuel rail assembly in accordance to the present invention; and
- Fig. 5: shows a third step of a preferred embodiment of a method for assembling a fuel rail assembly in accordance to the present invention.

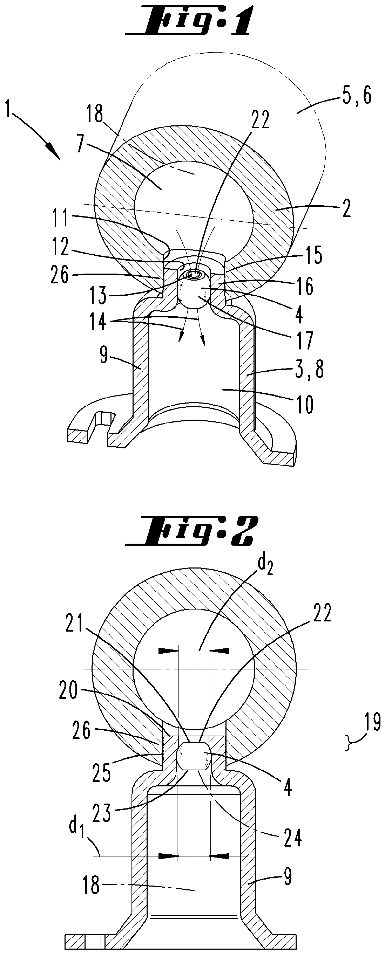

With regard to Figs. 1 and 2 it is described a preferred embodiment of a fuel rail assembly 1 in accordance to the present invention. It comprises a fuel rail 2, a component 3 and an expander bush 4. The fuel rail 2 has a casing 5 which in the shown example is the casing of a main gallery 6 of the fuel rail 2. The casing 5 borders an inner cavity 7. In the example, the component 3 is an injector cup 8 which has a housing 9 bordering an inner space 10. The main gallery 6 and the injector cup 8 are both made of metal. The casing 5 has a first via hole, the housing 9 has a second via hole 12 and the expander bush has a third via hole 13. The housing 9 is coupled to the casing 5 in a manner so that the space 10 is in fluid communication with the inner cavity 7 by a hollow passage 14 which is schematically indicated in Fig. 1 by arrows 14. The first via hole 11 has a circular hollow cross section which is surrounded by a wall region 15 of the casing 5. A second via hole 12 has a circular hollow cross section which is surrounded by a cylindrical wall section 16 of the housing 9. The cylindrical wall section 16 is axially inserted in the first via hole 11.

The expander bush 4 has a convex outer surface of revolution 17 with regard to a geometric rotational axis 18. The third via hole 13 extends along and concentrically with regard to the geometric rotational axis 18. The expander bush is press-fitted in the second via hole 12 so that the hollow passage 14 extends through the third via hole 13. The cylindrical wall section 16 is press-fitted in the first via hole 11.

The convex outer surface of revolution 17 has a maximum diameter d₁ which is bigger compared to a diameter d₂ of the circular hollow cross section of the second via hole 12 in a longitudinal section 19 of the second via hole 12 which, compared to the expander bush 4, is closer to an end face 20 of the cylindrical wall section 16. The longitudinal section 19 extends between the end face 20 and a longitudinal section of the cylindrical wall section 16 where the cylindrical wall section is radially expanded by the pressure exerted by the expander bush 4. Before the expander bush 4 was pressed axially into the second via hole 12, the second via hole 12 had the diameter d₂ uniquely in its complete longitudinal extension.

In the example, the convex outer surface of revolution 17 is a section of a spherical surface. However, this is not necessary. In more detail, the expander bush 4 has a first flat surface 21 extending at right angles to the rotational axis 18 which surrounds a first orifice of the third via hole 13. Further, the expander bush 4 has a second flat surface 23 extending at right angles to the rotational axis which surrounds a second orifice 24 of the third via hole 13, wherein the first flat surface 21 and the second flat surface 23 are opposite sides of the expander bush 4.

The third via hole 13 has a cylindrical shape. It extends concentrically with regard to the rotational axis 18.

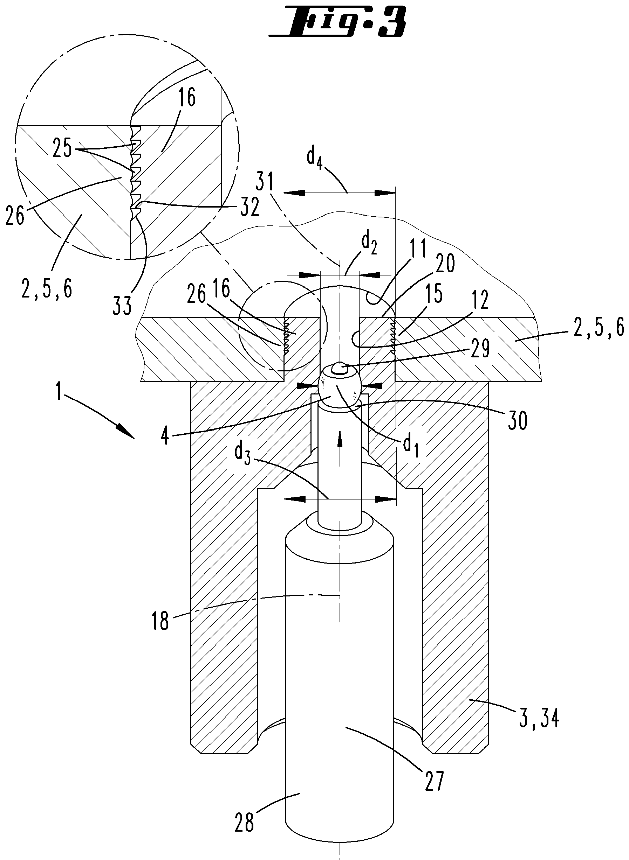

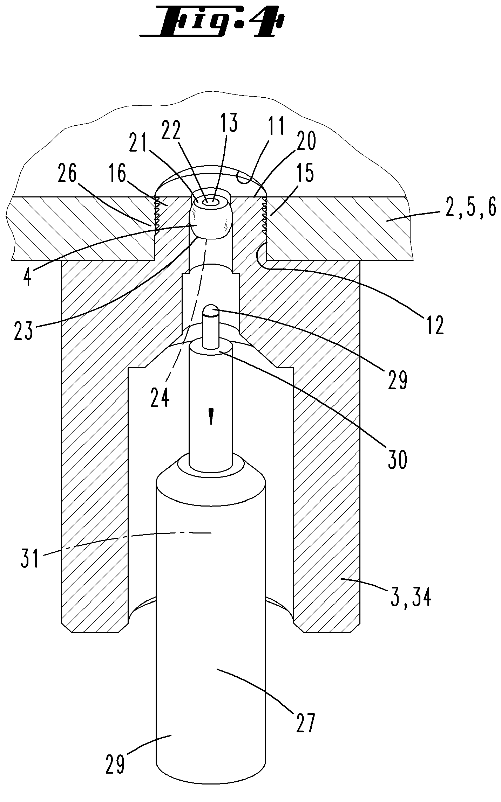

At an outside of the cylindrical wall section 16 of the component 3 a number of grooves 25 is formed. Each groove 25 circularly extends along the complete circumference of the outside of the cylindrical wall section. Corresponding grooves 25 are shown in more detail by Figs. 3-5. Because of the pressure exerted by the expander bush 4 some material which surrounds the first via hole 11 at the main gallery 6 is penetrated into the grooves 25, like it is also shown in further detail by Figs. 3-5. From the description it follows that the radial expansion of the cylindrical wall section 16 which has been effected by the radial pressure exerted by the expander bush 4 causes a mechanical coupling of the cylindrical wall section 16 to the casing 5 at a lateral wall section 26 of the first via hole 11. The mechanical coupling is achieved by a press-fit and also by the fact that material of the wall section 26 surrounding the first via hole 11 is penetrated into the grooves 25.

With regard to Figs. 3-5 a preferred embodiment of a method for assembling a fuel rail assembly 1 in accordance to the present invention is further described. In Figs. 3-5, features and details which have the same shape or at least a corresponding function or meaning compared to Figs. 1-2 are denoted by the same reference numbers. In the example of Figs. 3-5 the component 3 e.g. may be a sensor port 34.

In a considered first step of the method for assembling the fuel rail assembly 1, as shown by Fig. 3, the cylindrical wall section 16 is inserted into the first via hole 11. A diameter d₃ at the outside of the cylindrical wall section 16 in a longitudinal region which is dedicated to be inserted into the first via hole 11 and a diameter d₄ of the circular hollow cross section of the first via hole 11 in a longitudinal region dedicated for inserting the cylindrical wall section 16 are adapted to each other in order to cooperate for a medium fit, as long as the expander bush 4 is not axially pressed into the second via hole 12. As further shown by Fig. 3, an insertion tool 27 for pressing the expander bush 4 into the second via hole 12 is provided for performing the method as provided by the invention. The insertion tool 27 comprises an operating member 28 which in the example is a handle. Further, the insertion tool 27 comprises a pin 29 having a diameter which is adapted to the diameter of the third via hole 13 of the expander bush 4 in order to cooperate for a medium fit. Further, the insertion tool 27 comprises an annular contact surface 30 which is adjacent to the pin 29 and which extends transversely to a longitudinal axis 31 of the pin 29. For pressing the expander bush 4 into the second via hole 12, in Fig. 3 the pin 29 is inserted into the third via hole 13 so that the contact surface 33 contacts the expander bush 4. By the insertion tool 27 the expander bush 4 is pressed into the third via hole 13 until the expander bush 4 arrives at an axial position so that the expander bush 4 is close to an end face 20 of the cylindrical wall section 16.

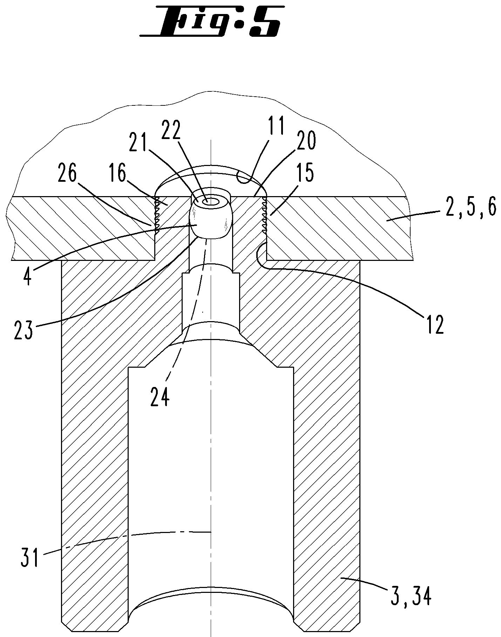

As shown by Fig. 5, after the expander bush 4 has arrived at the intended axial position, the insertion tool 27 is removed backwards. By the insertion tool 27 the expander bush 4 has been pressed into the second via hole 12 so that the hollow passage 14 extends through the third via hole 13 and so that the cylindrical wall section 16 is expanded in a radial direction by the convex outer surface of revolution 17. In result, the expander bush 4 is fixed by a press-fit within the second via hole 12 and hence remains withing the second via hole 12. Further, the radial expansion of the cylindrical wall section 16 has caused a mechanical coupling of the cylindrical wall section 16 by press-fit to the casing 5 at a lateral wall section 26 of the first via hole 11.

As shown by the enlarged detail included to Fig. 3, in the present example a number of grooves 25 are provided at the outside of the cylindrical wall section 16 of the component 3. Due to the radial expansion of the cylindrical wall section 16 (caused by the pressure exerted by the expander bush 4) material of the casing 5 which surrounds the first via hole 11 is penetrated into the grooves 25. The grooves 25 of the example are sharp-edged and have a saw-tooth profile. In further detail, each groove 25 has a first groove surface 32 at right angles with regard to a center axis of the second via hole 12 and has a second groove surface 33 which is inclined to the first groove surface 33 and which is farer away from an end face 20 of the cylindrical wall section 16 compared to the first groove surface 32.

All disclosed features are (for its own, but also in combination) relevant for the invention. The features of the dependent claims characterize also independent inventive improvements of the prior art, in particular for filing divisional applications on a basis of these claims.

### List of references

- 1: fuel rail assembly
- 2: fuel rail
- 3: component
- 4: expander bush
- 5: casing
- 6: main gallery
- 7: inner cavity
- 8: injector cup
- 9: housing
- 10: space
- 11: first via hole
- 12: second via hole
- 13: third via hole
- 14: hollow passage
- 15: wall region
- 16: cylindrical wall region
- 17: convex outer surface of revolution
- 18: geometric rotational axis
- 19: longitudinal section
- 20: end face
- 21: first flat surface
- 22: first orifice
- 23: second flat surface
- 24: second orifice
- 25: grooves
- 26: lateral wall section
- 27: insertion tool
- 28: operating member
- 29: pin
- 30: annular contact surface
- 31: longitudinal axis
- 32: first groove surface
- 33: second groove surface
- d₁: diameter
- d₂: diameter
- d₃: diameter
- d₄: diameter

## Claims

1. Method for assembling a fuel rail assembly (1), comprising the steps:
providing a fuel rail (2) and a component (3) which is to be coupled to the fuel rail (2), wherein the fuel rail (2) has a casing (5) which borders an inner cavity (7) and which has a first via hole (11) and wherein the component (3) has a housing (9) which borders an inner space (10) and which has a second via hole (12), and coupling the housing (9) to the casing (5) so that the space (10) is in fluid communication with the inner cavity (7) by a hollow passage (14), wherein the first via hole (11) has a circular hollow cross section which is surrounded by a wall region (15) of the casing (5), the second via hole (12) has a circular hollow cross section which is surrounded by a cylindrical wall section (16) of the housing(9), and coupling of the housing (9) to the casing (5) so that the space (10) is in fluid communication with the inner cavity (7) by a hollow passage (14) comprises the steps: inserting the cylindrical wall section (16) into the first via hole (11), providing an expander bush (4) which has a convex outer surface 17, which in particular is a convex outer surface of revolution (17) with regard to a geometric rotational axis (18), and which has a third via hole (13), which in particular extends along the geometric rotational axis (18), wherein the convex outer surface (17) has a maximum diameter which is bigger compared to a diameter of the circular hollow cross section of the second via hole (12), pressing the expander bush (4) in the second via hole (12) so that the hollow passage (14) extends through the third via hole (13), so that the cylindrical wall section (16) is expanded in a radial direction by the convex outer surface (17) and so that the expander bush (4) is fixed by a press-fit within the second via hole (12), wherein the radial expansion of the cylindrical wall section (16) causes a mechanical coupling of the cylindrical wall section (16) to the casing (5) at a lateral wall section (26) of the first via hole (11) and **characterized in that** the method comprises: providing an insertion tool (27) for pressing the expander bush (4) into the second via hole (12), wherein the insertion tool (27) comprises an operating member (28), in particular a handle or a drivable member, in particular drivable by an electric, pneumatic or hydraulic device, and wherein the insertion tool (27) comprises a pin (29), wherein the pin (29) has a diameter which is adapted to a diameter of the third via hole (13) of the expander bush (4) to cooperate for a loose fit or a medium fit, and wherein the insertion tool (27) comprises an annular contact surface (30) which is adjacent to the pin (29) and which extends transversely to a longitudinal axis (31) of the pin (29), inserting the pin (29) into the third via hole (13) so that the contact surface (30) is in contact with the expander bush (4), and pressing the expander bush (4) into the third via hole (13) by the insertion tool (27)..

2. Method according to the preceding claim, **characterized in that** the component 83) is an injector cup (8) or is a sensor port (27).

3. Method in accordance to any of the preceding claims, **characterized in that** the radial expansion of the cylindrical wall section (16) causes a press-fit between the outside of the cylindrical wall section (16) and the wall region (15) surrounding the first via hole (11).

4. Method in accordance to any of the preceding claims, **characterized in that** the convex outer surface of revolution (17) has a maximum diameter which is bigger compared to a diameter of the circular hollow cross section of the second via hole (12) before the expander bush (4) is pressed into the second via hole (12).

5. Method in accordance to any of the preceding claims, **characterized in that** before assembling the fuel rail assembly (1) the diameter (d₃) at the outside of the cylindrical wall section (16) in a longitudinal region dedicated to be inserted in the first via hole (11) and a diameter (d₄) of the circular hollow cross section of the first via hole (11) in a longitudinal region dedicated for inserting the cylindrical wall section (16) are adapted to each other in order to cooperate for a loose fit or a medium fit.

6. Method according to any of the preceding claims, **characterized in that** the longitudinal axis (31) is aligned concentrically with regard to the second via hole before pressing the expander bush (4) into the second via hole (12).

## Patentansprüche

1. Verfahren zur Montage einer Kraftstoffverteileranordnung (1), umfassend die folgenden Schritte: Bereitstellen eines Kraftstoffverteilers (2) und einer Komponente (3), die mit dem Kraftstoffverteiler (2) gekoppelt werden soll, wobei der Kraftstoffverteiler (2) eine Umhüllung (5) aufweist, die an einen inneren Hohlraum (7) angrenzt und die eine erste Durchgangsöffnung (11) aufweist, und wobei die Komponente (3) ein Gehäuse (9) aufweist, das an einen inneren Raum (10) angrenzt und das eine zweite Durchgangsöffnung (12) aufweist, und Koppeln des Gehäuses (9) mit der Umhüllung (5) derart, dass der Raum (10) in Fluidverbindung mit dem inneren Hohlraum (7) durch einen hohlen Durchlass (14) ist, wobei die erste Durchgangsöffnung (11) einen kreisförmigen hohlen Querschnitt aufweist, der durch einen Wandbereich (15) der Umhüllung (5) umgeben ist, wobei die zweite Durchgangsöffnung (12) einen kreisförmigen hohlen Querschnitt aufweist, der durch einen zylindrischen Wandabschnitt (16) des Gehäuses (9) umgeben ist, und wobei das Koppeln des Gehäuses (9) mit der Umhüllung (5) derart, dass der Raum (10) in Fluidverbindung mit dem inneren Hohlraum (7) durch einen hohlen Durchlass (14) ist, die folgenden Schritte umfasst: Einsetzen des zylindrischen Wandabschnitts (16) in die erste Durchgangsöffnung (11), Bereitstellen einer Dehnhülse (4), die eine konvexe Außenfläche 17 aufweist, die insbesondere eine konvexe Außendrehfläche (17) in Bezug auf eine geometrische Rotationsachse (18) ist, und die eine dritte Durchgangsöffnung (13) aufweist, die sich insbesondere entlang der geometrischen Rotationsachse (18) erstreckt, wobei die konvexe Außenfläche (17) einen maximalen Durchmesser aufweist, der im Vergleich zu einem Durchmesser des kreisförmigen hohlen Querschnitts der zweiten Durchgangsöffnung (12) größer ist, Drücken der Dehnhülse (4) in die zweite Durchgangsöffnung (12) derart, dass sich der hohle Durchlass (14) durch die dritte Durchgangsöffnung (13) derart erstreckt, dass der zylindrische Wandabschnitt (16) in einer radialen Richtung durch die konvexe Außenfläche (17) gedehnt wird, und derart, dass die Dehnhülse (4) durch eine Presspassung in der zweiten Durchgangsöffnung (12) fixiert ist, wobei die radiale Dehnung des zylindrischen Wandabschnitts (16) eine mechanische Kopplung des zylindrischen Wandabschnitts (16) an der Umhüllung (5) an einem lateralen Wandabschnitt (26) der ersten Durchgangsöffnung (11) bewirkt, und **dadurch gekennzeichnet, dass** das Verfahren Folgendes umfasst: Bereitstellen eines Einsetzwerkzeugs (27) zum Drücken der Dehnhülse (4) in die zweite Durchgangsöffnung (12), wobei das Einsetzwerkzeug (27) ein Betätigungselement (28), insbesondere einen Griff oder ein antreibbares Element, insbesondere durch eine elektrische, pneumatische oder hydraulische Vorrichtung antreibbar, umfasst, und wobei das Einsetzwerkzeug (27) einen Stift (29) umfasst, wobei der Stift (29) einen Durchmesser aufweist, der auf einen Durchmesser der dritten Durchgangsöffnung (13) der Dehnhülse (4) abgestimmt ist, um für eine Spielpassung oder eine Übergangspassung zusammenzuwirken, und wobei das Einsetzwerkzeug (27) eine ringförmige Kontaktfläche (30) umfasst, die an den Stift (29) angrenzt und die sich quer zu einer Längsachse (31) des Stifts (29) erstreckt, Einsetzen des Stifts (29) in die dritte Durchgangsöffnung (13) derart, dass die Kontaktfläche (30) in Kontakt mit der Dehnhülse (4) ist, und Drücken der Dehnhülse (4) in die dritte Durchgangsöffnung (13) durch das Einsetzwerkzeug (27).

2. Verfahren nach dem vorhergehenden Anspruch, **dadurch gekennzeichnet, dass** die Komponente 83) eine Einspritzventilaufnahme (8) ist oder ein Sensoranschluss (27) ist.

3. Verfahren nach einem der vorhergehenden Ansprüche, **dadurch gekennzeichnet, dass** die radiale Dehnung des zylindrischen Wandabschnitts (16) eine Presspassung zwischen der Außenseite des zylindrischen Wandabschnitts (16) und dem Wandbereich (15), der die erste Durchgangsöffnung (11) umgibt, bewirkt.

4. Verfahren nach einem der vorhergehenden Ansprüche, **dadurch gekennzeichnet, dass** die konvexe Außendrehfläche (17) einen maximalen Durchmesser aufweist, der im Vergleich zu einem Durchmesser des kreisförmigen hohlen Querschnitts der zweiten Durchgangsöffnung (12) größer ist, bevor die Dehnhülse (4) in die zweite Durchgangsöffnung (12) gedrückt wird.

5. Verfahren nach einem der vorhergehenden Ansprüche, **dadurch gekennzeichnet, dass** vor Montage der Kraftstoffverteileranordnung (1) der Durchmesser (d₃) an der Außenseite des zylindrischen Wandabschnitts (16) in einem Längsbereich, der dazu vorgesehen ist, in die erste Durchgangsöffnung (11) eingesetzt zu werden, und ein Durchmesser (d₄) des kreisförmigen hohlen Querschnitts der ersten Durchgangsöffnung (11) in einem Längsbereich, der zum Einsetzen des zylindrischen Wandabschnitts (16) vorgesehen ist, aufeinander abgestimmt werden, um für eine Spielpassung oder eine Übergangspassung zusammenzuwirken.

6. Verfahren nach einem der vorhergehenden Ansprüche, **dadurch gekennzeichnet, dass** die Längsachse (31) vor Drücken der Dehnhülse (4) in die zweite Durchgangsöffnung (12) konzentrisch in Bezug auf die zweite Durchgangsöffnung ausgerichtet wird.

## Revendications

1. Procédé d'assemblage d'un ensemble rampe d'injection de carburant (1), comprenant les étapes suivantes:
la fourniture d'une rampe d'injection de carburant (2) et d'un composant (3) qui est appelé à être accouplé à la rampe d'injection de carburant (2), la rampe d'injection de carburant (2) étant pourvue d'une enveloppe (5) qui délimite une cavité intérieure (7) et qui est pourvue d'un premier trou traversant (11) et le composant (3) étant pourvu d'une coque (9) qui délimite un espace intérieur (10) et qui est pourvue d'un deuxième trou traversant (12), et l'accouplement de la coque (9) à l'enveloppe (5) de façon à mettre l'espace (10) en communication fluidique avec la cavité intérieure (7) au moyen d'un passage creux (14), le premier trou traversant (11) étant pourvu d'une section transversale circulaire creuse qui est entourée d'une région de paroi (15) de l'enveloppe (5), le deuxième trou traversant (12) étant pourvu d'une section transversale circulaire creuse qui est entourée d'un segment de paroi cylindrique (16) de la coque (9), et l'accouplement de la coque (9) à l'enveloppe (5) de façon à mettre l'espace (10) en communication fluidique avec la cavité intérieure (7) au moyen d'un passage creux (14) comprenant les étapes suivantes : l'insertion du segment de paroi cylindrique (16) dans le premier trou traversant (11), la fourniture d'une douille de dilatation (4) qui est pourvue d'une surface extérieure convexe (17), s'agissant plus particulièrement d'une surface de révolution extérieure convexe (17) par rapport à un axe géométrique de rotation (18), et qui est pourvue d'un troisième trou traversant (13), qui plus particulièrement s'étend suivant l'axe géométrique de rotation (18), la surface extérieure convexe (17) étant pourvue d'un diamètre maximal qui est plus grand qu'un diamètre de la section transversale circulaire creuse du deuxième trou traversant (12), l'enfoncement de la douille de dilatation (4) dans le deuxième trou traversant (12) de façon à ce que le passage creux (14) s'étende au travers du troisième trou traversant (13), de façon à ce que la surface extérieure convexe (17) dilate le segment de paroi cylindrique (16) dans une direction radiale et de façon à ce que la douille de dilatation (4) soit calée par un ajustement serré à l'intérieur du deuxième trou traversant (12), la dilatation radiale du segment de paroi cylindrique (16) provoquant un accouplement mécanique du segment de paroi cylindrique (16) à l'enveloppe (5) au niveau d'un segment de paroi latéral (26) du premier trou traversant (11), et le procédé étant **caractérisé en ce qu'**il comprend : la fourniture d'un outil d'insertion (27) destiné à enfoncer la douille de dilatation (4) dans le deuxième trou traversant (12), l'outil d'insertion (27) comprenant un organe fonctionnel (28), plus particulièrement un manche ou un organe actionnable, plus particulièrement actionnable par un dispositif électrique, pneumatique ou hydraulique, et l'outil d'insertion (27) comprenant une broche (29), la broche (29) étant pourvue d'un diamètre qui est adapté à un diamètre du troisième trou traversant (13) de la douille de dilatation (4) pour une coopération en vue d'un ajustement lâche ou d'un ajustement moyen, et l'outil d'insertion (27) comprenant une surface de contact annulaire (30) qui est adjacente à la broche (29) et qui s'étend transversalement à un axe longitudinal (31) de la broche (29), l'insertion de la broche (29) dans le troisième trou traversant (13) de façon à ce que la surface de contact (30) vienne au contact de la douille de dilatation (4), et l'enfoncement de la douille de dilatation (4) dans le troisième trou traversant (13) au moyen de l'outil d'insertion (27).

2. Procédé selon la revendication précédente, **caractérisé en ce que** le composant (83) est un raccord d'injecteur (8) ou un port de capteur (27).

3. Procédé selon l'une quelconque des revendications précédentes, **caractérisé en ce que** la dilatation radiale du segment de paroi cylindrique (16) provoque un ajustement serré entre l'extérieur du segment de paroi cylindrique (16) et la région de paroi (15) entourant le premier trou traversant (11).

4. Procédé selon l'une quelconque des revendications précédentes, **caractérisé en ce que** la surface de révolution extérieure convexe (17) est pourvue d'un diamètre maximal qui est plus grand qu'un diamètre de la section transversale circulaire creuse du deuxième trou traversant (12) avant que la douille de dilatation (4) soit enfoncée dans le deuxième trou traversant (12).

5. Procédé selon l'une quelconque des revendications précédentes, **caractérisé en ce que**, avant l'assemblage de l'ensemble rampe d'injection de carburant (1), le diamètre (d₃) à l'extérieur du segment de paroi cylindrique (16) dans une région longitudinale destinée à être insérée dans le premier trou traversant (11) et un diamètre (d₄) de la section transversale circulaire creuse du premier trou traversant (11) dans une région longitudinale destinée à l'insertion du segment de paroi cylindrique (16) sont adaptés l'un à l'autre dans le but de coopérer en vue d'un ajustement lâche ou d'un ajustement moyen.

6. Procédé selon l'une quelconque des revendications précédentes, **caractérisé en ce que** l'axe longitudinal (31) est aligné concentriquement par rapport au deuxième trou traversant avant l'enfoncement de la douille de dilatation (4) dans le deuxième trou traversant (12).
